# EUROPÄISCHE PATENTSCHRIFT

(11) **EP 0 707 160 B1**
(45) Veröffentlichungstag und Bekanntmachung des Hinweises auf die Patenterteilung: **02.12.1998**
(21) Anmeldenummer: 95110610.3
(22) Anmeldetag: 07.07.1995
(51) Int. Cl.: F16F 9/56, A47C 3/30, A47B 9/10

(54) **Längenverstellbare Gasfeder für Stühle, Tische o.dgl.**
Adjustable-length gas spring for chairs, tables etc.
Ressort pneumatique de longueur réglable

(30) Priorität: 28.07.1994 DE 4426846; 17.12.1994 DE 4445190
(43) Veröffentlichungstag der Anmeldung: 17.04.1996
(73) Patentinhaber: SUSPA COMPART Aktiengesellschaft, 90518 Altdorf (DE)
(72) Erfinder: Bauer, Hans Jürgen, D-90518 Altdorf (DE); Böhm, Walter, D-90537 Feucht (DE)
(74) Vertreter: Rau, Manfred, Dr. Dipl.-Ing.

(56) Entgegenhaltungen:
- EP-A- 0 133 524
- DD-A- 273 457

## Beschreibung

Die Erfindung betrifft eine längenverstellbare Gasfeder nach dem Oberbegriff des Anspruches 1.

Derartige längenverstellbare Gasfedern sind grundsätzlich aus der DE-PS 18 12 282 (entsprechend US-PS 3 656 593) bekannt und in der Praxis insbesondere für höhenverstellbare Stühle weit verbreitet. Sie werden hierbei in der Weise eingesetzt, daß der zylindrische Abschnitt des Gehäuses in einem Führungsrohr axial verschiebbar angeordnet wird, das wiederum an einem Fußgestell eines Stuhles befestigt ist. Das äußere freie Ende der Kolbenstange wird am Boden des Führungsrohres befestigt. Das dem Austritt der Kolbenstange entgegengesetzte Ende des Gehäuses, d.h. des Außenzylinders, wird in einer Klemmeinrichtung befestigt, die an der Unterseite des Sitzes eines Stuhles oder einer Tischplatte angebracht ist. Eine solche Ausgestaltung der längenverstellbaren Gasfeder als selbsttragendes Element einer Stuhlsäule oder auch einer Tischsäule ist ebenfalls allgemein bekannt und beispielsweise in der DE-PS 19 31 012 (entsprechend US-PS 3 711 054) beschrieben. Der in der Befestigungseinrichtung zu befestigende Befestigungsabschnitt des Außenzylinders der Gasfeder kann zylindrisch sein, wie es in der DE-PS 19 31 012 (entsprechend US-PS 3 711 054) beschrieben ist, oder aber er kann als Klemm-Konus ausgebildet sein, so daß er nur fest in eine entsprechend konische Aufnahme eingesetzt werden muß. Dies ist ebenfalls in der Praxis weit verbreitet.

Beim Einsatz der gattungsgemäßen längenverstellbaren Gasfedern als selbsttragende Elemente insbesondere in Stuhlsäulen werden Biegewechselbeanspruchungen auf den Außenzylinder übertragen, die am Übergang von dem Befestigungsabschnitt zum im Führungsrohr geführten rein zylindrischen Abschnitt des Außenzylinders am größten sind. Diese Biegewechselbeanspruchungen resultieren im wesentlichen daher, daß die Benutzer von Stühlen in der Regel nicht zentrisch zur Mittel-Längs-Achse der Gasfeder auf dem Stuhl sitzen, also erhebliche Biegemomente auf den Außenzylinder der Gasfeder aufbringen und daß darüber hinaus die meisten Benutzer von Stühlen sich während des Sitzens auf den Stühlen ständig bewegen. Der durch die Biegewechselbeanspruchungen bedingten Bruchgefahr ist in der Vergangenheit durch Einsatz immer dickwandigerer Außenzylinder und durch Verwendung immer höherwertigerer Stähle für die Außenzylinder begegnet worden. Dies hat einerseits entsprechende Kostenbelastungen mit sich gebracht und immer noch Wünsche hinsichtlich der Biegewechselfestigkeit offen gelassen.

Der Erfindung liegt die Aufgabe zugrunde, eine längenverstellbare Gasfeder der gattungsgemäßen Art zum Einsatz als selbsttragendes Längenverstellelement insbesondere in Stuhlsäulen aber gegebenenfalls auch in Tischen und dgl. so auszugestalten, daß die Gefahr von Brüchen aufgrund von Biegewechselbeanspruchungen weiter reduziert wird.

Diese Aufgabe wird erfindungsgemäß durch die Merkmale im Kennzeichnungsteil des Anspruches 1 gelöst. Durch die erfindungsgemäßen Maßnahmen, wonach der Außenzylinder der Gasfeder nur an seiner Außenseite eine durch Nitrierhärtung hergestellte dünne harte äußere Nitrier-Schicht aufweist, kann in überraschender Weise einerseits die Biegewechselfestigkeit drastisch erhöht werden und andererseits die Wanddicke des Außenzylinders und die Qualität des eingesetzten Stahls herabgesetzt werden. Dies führt zu Gewichtsersparnis, Kostenersparnis und Erhöhung der Sicherheit. Bei Einsatz von gezogenen Rohren zur Herstellung der Außenzylinder bleibt die geringe Rauhtiefe der Innenwand des Außenzylinders erhalten, so daß bei der Montage der Gasfedern die an der Innenwand des Außenzylinders entlang geschobenen und später an dieser anliegenden Ringdichtungen nicht beschädigt werden. Durch die dünne Nitrier-Schicht wird der Außenzylinder im Nitrierbereich unter Druckspannungen gesetzt, so daß bei Biegewechselbeanspruchungen die das wesentliche Volumen des Außenzylinders ausmachende Kernschicht unter geringere Zugspannungen gesetzt wird; die vorhandenen Druckspannungen werden ganz oder teilweise neutralisiert. Es bilden sich daher keine Haarrisse, die zu einem späteren Bruch führen können. Dies ist wesentlich mit darauf zurückzuführen, daß die Nitrier-Schicht selber wiederum aus einer harten Verbindungsschicht mit einer Dicke von 4 bis 6 µm als Außenschicht und einer sich zur Kernschicht anschließenden Diffusionsschicht mit einer Dicke von 100 bis 200 µm besteht. Die Verbindungsschicht ist eine Nitrid-Schicht aus einer chemisch-reaktiven Eisen-Stickstoff-Verbindung, während in der Diffusionsschicht durch Stickstoffeinlagerung Mischkristalle gebildet sind, die eine Verschiebung der Gitterstruktur einschränken. Auch diese Diffusionsschicht ist in Bezug auf die Biegewechselfestigkeit sehr bedeutsam. Der Härteabfall von der als Außenschicht dienenden Verbindungsschicht zur Diffusionsschicht vollzieht sich kontinuierlich bis zur Härte des die Kernschicht bildenden Grundwerkstoffes.

Im Bereich des Befestigungsabschnittes kann die beim Nitrierhärten auftretende relativ große Rauhtiefe der dünnen harten äußeren Nitrier-Schicht erhalten bleiben, da hierdurch die Halterung in einer Befestigungseinrichtung verbessert wird. Der sich an den Befestigungsabschnitt anschließende rein zylindrische Abschnitt wird üblicherweise poliert, damit eine geringe Reibung gegenüber einer Führungsbüchse eines Führungsrohres erreicht wird.

Weitere zum Teil erfinderische Merkmale ergeben sich aus den Unteransprüchen.

Der Außenzylinder kann durch das äußere Mantelrohr der Gasfeder selber oder durch ein zusätzliches die Gasfeder umgebendes Schutzrohr gebildet sein, wie es aus der EP 0 133 524 B (entsprechend US-PS 4 979 718) bekannt ist.

Weitere Merkmale, Einzelheiten und Vorteile der Erfindung ergeben sich aus der nachfolgenden Beschreibung zweier Ausführungsbeispiele anhand der Zeichnung. Es zeigt
- Fig. 1: eine längenverstellbare Gasfeder im Längsschnitt,
- Fig. 2: den Außenzylinder der Gasfeder vor der Montage der Gasfeder im Längsschnitt,
- Fig. 3: eine längenverstellbare Gasfeder mit einem gesonderten Außenzylinder, teilweise aufgeschnitten und
- Fig. 4: den zusätzlichen Außenzylinder vor der Montage der Gasfeder im Längsschnitt.

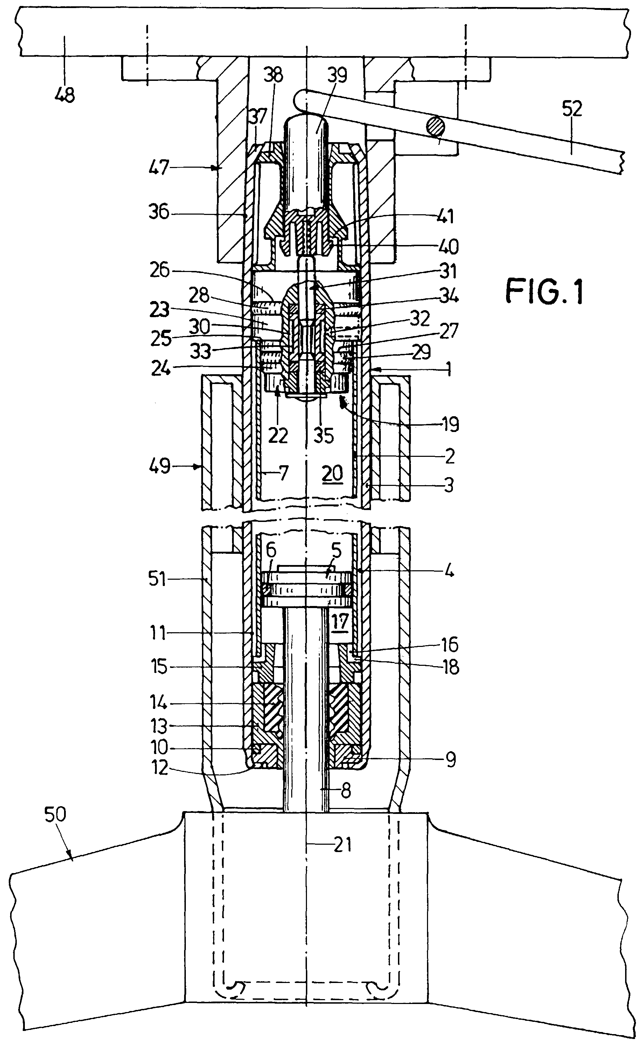

Die in Fig. 1 dargestellte längenverstellbare Gasfeder weist ein Gehäuse 1 auf, das im wesentlichen aus zwei konzentrisch ineinander gelagerten Rohren mit unterschiedlichem Durchmesser, nämlich einem Innenzylinder 2 und einem Außenzylinder 3 besteht. Zwischen dem Außenzylinder 3 und dem Innenzylinder 2 ist aufgrund des unterschiedlichen Durchmessers von Innenzylinder 2 und Außenzylinder 3 ein Ringraum 4 gebildet.

In dem Innenzylinder 2 ist ein etwa ringförmiger Kolben 5 axial verschiebbar angeordnet, der über einen Dichtungsring 6 gasdicht mit seinem Außenumfang gegenüber der Innenwand 7 des Innenzylinders 2 abgedichtet ist. Der Kolben 5 ist an einem Ende einer koaxial zum Gehäuse 1 geführten Kolbenstange 8 befestigt. Diese Kolbenstange 8 ist aus einem Ende des Gehäuses 1 herausgeführt. An diesem Ende ist das Gehäuse 1 durch einen Abschlußring 9 verschlossen, der an seinem Außenumfang mittels einer Ringdichtung 10 gegenüber der Innenwand 11 des Außenzylinders 3 gasdicht abgedichtet ist. Der Abschlußring 9 ist durch Umbördelung 12 des Außenzylinders 3 axial nach außen gehalten. Auf der Innenseite liegt gegen den Abschlußring 9 eine topfförmige Hülse 13 an, die eine Mehrfach-Lippen-Dichtung 14 aufnimmt, die mit ihren Lippen dichtend gegen die Kolbenstange 8 anliegt. Dadurch wird ein Gasaustritt entlang der Oberfläche der Kolbenstange 8 nach außen unterbunden.

Gegen die Hülse 13 stützt sich vom Innenraum des Gehäuses 1 her ein an der Innenwand 11 des Außenzylinders 3 anliegendes Zentrierstück 15 ab, das mit Rippen 16 versehen ist, auf denen der Innenzylinder 2 mit seiner Innenwand 7 radial abgestützt, also zentriert ist. Auf diesen Rippen 16 ist der Innenzylinder 2 auch axial fest abgestützt, also axial einseitig festgelegt. Dadurch daß nur Rippen 16 zur Zentrierung und axialen Abstützung des Innenzylinders 2 vorgesehen sind, ist in diesem Bereich der Ringraum 4 mit dem Gehäuseraum 17 im Innenzylinder 2 verbunden, der zwischen dem Kolben 5, dem kolbenstangenaustrittsseitigen Ende des Gehäuses 1 und der Innenwand 7 des Innenzylinders 2 begrenzt wird. Zwischen den Rippen 16 sind also Überströmkanäle 18 zwischen dem Gehäuseraum 17 und dem Ringraum 4 gebildet.

An dem dem Kolbenstangenaustritt entgegengesetzten Ende des Gehäuses 1 ist ein Ventil 19 angeordnet, mittels dessen der im Innenzylinder 2 zwischen dem Kolben 5 und dem Ventil 19 befindliche Gehäuseraum 20 mit dem Ringraum 4 und damit dem anderen Gehäuseraum 17 verbunden bzw. von diesem getrennt werden kann.

Die gesamte Gasfeder einschließlich des Ventils 19 ist im wesentlichen symmetrisch zur Mittel-Längs-Achse 21 aufgebaut. Das Ventil 19 weist einen Ventilkörper 22 auf, der aus einem äußeren Abschnitt 23 und einem inneren Abschnitt 24 gebildet ist. Der äußere Abschnitt 23 liegt gegen die Innenwand 11 des Außenzylinders 3 an, wodurch der Ventilkörper 22 relativ zum Außenzylinder 3 zentriert wird. Der ebenfalls zylindrische Abschnitt 24 geringeren Durchmessers liegt gegen die Innenwand 7 des Innenzylinders 2 an, wodurch eine Zentrierung zwischen Ventilkörper 22 und Innenzylinder 2 und damit auch zwischen Innenzylinder 2 und Außenzylinder 3 erfolgt. Im Übergangsbereich vom Abschnitt 23 zum Abschnitt 24 ist ein Anschlagbund 25 ausgebildet, mittels dessen der Ventilkörper 22 in axialer Richtung gegen den Innenzylinder 2 anliegt. Im Bereich des Abschnitts 23 einerseits und des Abschnitts 24 andererseits sind in entsprechenden Ringnuten 26, 27 Ringdichtungen 28, 29 angeordnet, mittels derer jeweils eine gasdichte Verbindung zwischen dem Abschnitt 23 und der Innenwand 11 des Außenzylinders 3 einerseits und zwischen dem inneren Abschnitt 24 und der Innenwand 7 des Innenzylinders 2 andererseits erreicht wird.

Der Ventilkörper 22 ist im Bereich seines äußeren Abschnitts 23 mit einer zylindrischen, koaxialen Führungsbohrung 30 versehen, in der ein Ventilstift 31 angeordnet ist, der nach außen aus dem Ventilkörper 22 herausragt. Dieser im wesentlichen zylindrische Ventilstift 31 ist in der Führungsbohrung 30 geführt. Der Ventilkörper 22 weist einen radial zur Achse 21 verlaufenden Überströmkanal 32 auf, der den Ringraum 4 mit der Führungsbohrung 30 verbindet. Der Ventilstift 31 weist eine Einschnürung 33 auf, die sich stets in Überdeckung mit der Einmündung des Überströmkanals 32 in die Führungsbohrung 30 befindet. Beiderseits der Einschnürung 33 sind im Ventilkörper 22 Ringdichtungen 34, 35 angeordnet, die dichtend gegen den Ventilstift 31 anliegen. Die Ringdichtung 34 verhindert stets einen Gasaustritt aus dem Ventil 19 nach außen. Die Ringdichtung 35 dichtet bei geschlossenem Ventil den Gehäuseraum 20 gegen den Ringraum 4 und damit den Gehäuseraum 17 ab. Wenn der Ventilstift 31 in Richtung auf den Gehäuseraum 20 zu in den Ventilkörper 22 hineingedrückt wird, überbrückt die Einschnürung 33 die Ringdichtung 35, wodurch der Gehäuseraum 20 über den Überströmkanal 32 mit dem Ringraum 4 und damit mit dem anderen Gehäuseraum 17 verbunden wird. Hierbei sind dann Längenverstellungen der Gasfeder möglich. Der grundsätzliche Aufbau und die grundsätzliche Wirkungsweise dieser mindestens teilweise mit Druckgas gefüllten, längenverstellbaren Gasfeder ist im übrigen allgemein bekannt, beispielsweise aus der DE-PS 18 12 282 (entsprechend US-PS 3 656 593).

Das Gehäuse 1 weist in seinem in der Zeichnung oberen, dem Austritt der Kolbenstange 8 entgegengesetzten Bereich einen konisch verjüngten Befestigungsabschnitt 36 auf, dessen Rand 37 nach innen zur Achse 21 hin eingezogen ist. Dieser Rand 37 bildet somit einen Anschlag für ein Distanzstück 38, gegen das sich wiederum der Ventilkörper 22 in Richtung der Achse 21 abstützt. In dem Distanzstück 38 ist ein Schiebekörper 39 verschiebbar geführt, der mittels widerhakenartiger Zungen 40 hinter einen dem Ventilkörper 22 zugewandten Anschlagrand 41 des Distanzstücks 38 greift. Der Schiebekörper 39 ragt aus dem Außenzylinder 3 hinaus. Er liegt andererseits gegen den Ventilstift 31 an. Eine Betätigung der Gasfeder von außen erfolgt also über den Schiebekörper 39.

Die längenverstellbare Gasfeder wird in allgemein üblicher Weise derart eingesetzt, daß der konisch verjüngte Befestigungsabschnitt 36 in einer entsprechenden Halteeinrichtung 47 an der Unterseite des Sitzes 48 eines Stuhles durch Konusklemmung befestigt wird und daß ansonsten das Gehäuse 1 der Gasfeder in einer Führungsbüchse 49 eines mit einem Fußgestell 50 eines Stuhles verbundenen Standrohres 51 in Richtung der Achse 21 verschiebbar quer dazu aber geführt angeordnet wird. Die Kolbenstange 8 wird an einem Boden eines solchen Standrohres 51 befestigt. In der Halteeinrichtung 47 ist auch ein Bedienungshebel 52 zur Betätigung des Schiebekörpers 39 und damit des Ventils 19 schwenkbar gelagert. Diese Ausgestaltung ist ganz allgemeine Praxis.

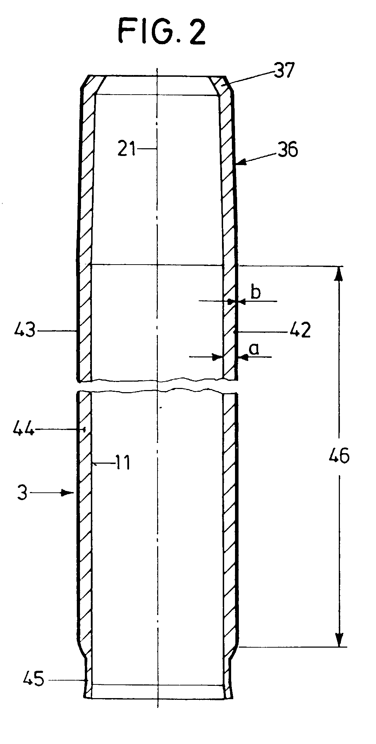

Beim Einsatz solcher selbsttragender Gasfedern in Stühlen, bei denen also die Belastungen vom Sitz her direkt in den Außenzylinder 3 der Gasfeder eingebracht werden, wird der Außenzylinder 3 mit hohen Biegewechselbelastungen beaufschlagt. Um diesen Biegewechselbelastungen standhalten zu können, ist der Außenzylinder 3, der in Fig. 2 vor der Montage der Gasfeder dargestellt ist, nur auf seiner Außenseite 42 mit einer dünnen harten Nitrier-Schicht 43 versehen worden, die also durch Nitrierhärten hergestellt ist. Der Außenzylinder 3 besteht somit aus einer dünnen äußeren Nitrier-Schicht 43 und einer sehr viel dickeren weicheren Kernschicht 44, die bis zur Innenwand 11 des Außenzylinders 3 sich erstreckt. Die gesamte Wanddicke a des Außenzylinders 3 beträgt üblicherweise 1,8 bis 2,2 mm, beispielsweise 2,0 mm, während die Dicke b der dünnen äußeren Nitrier-Schicht 43 etwa 100 bis 200 µm beträgt. Die Nitrier-Schicht 43 besteht wiederum aus einer sehr dünnen, etwa 4 bis 6 µm dicken Außenschicht, in der sich durch das Nitrieren Eisennitrid gebildet hat, das extrem hart ist. An diese extrem harte Außenschicht schließt sich eine Diffusionsschicht an, die entsprechend den vorstehenden Angaben sehr viel dicker ist. In dieser Diffusionsschicht ist Stickstoff in die Eisenkristalle des Stahls eingebunden, wodurch eine Verschiebung der Kristalle in der Gitterstruktur eingeschränkt wird. Auch diese Diffusionsschicht ist also in Bezug auf die Biegewechselfestigkeit von erheblicher Bedeutung. Aus zeichnerischen Gründen sind die extrem harte Außenschicht und die Diffusionsschicht in der Zeichnung nicht gesondert, sondern nur als eine einheitliche Nitrier-Schicht 43 dargestellt. Der konisch verjüngte Befestigungsabschnitt 36 und dessen nach innen gezogener Rand 37 sind vor dem Nitrierhärten angeformt worden. Dagegen kann der entgegengesetzte, bei der fertig montierten Gasfeder als Umbördelung 12 ausgebildete verjüngte Rand 45 des Außenzylinders 3 nach dem Nitrierhärten seiner Außenfläche noch umgebördelt werden, da dieser Bereich keinen Biegewechselbelastungen ausgesetzt ist.

Der Außenzylinder 3 ist aus einem gezogenen Rohr hergestellt, dessen Innenwand 11 eine extrem geringe Rauhtiefe von 1 bis 2 µm aufweist, die erhalten bleibt, da die Innenwand 11 nicht einer Nitrierhärtung unterzogen wird. Bei der Montage der Gasfeder werden demzufolge die Ringdichtungen 28 nicht beschädigt. Wichtig ist also, daß die Innenwand 11 des Außenzylinders 3, soweit die Ringdichtungen 28 bei der Montage über sie geschoben werden, nicht gehärtet ist. Durch das Nitrierhärten erhält die Außenseite 42 des Außenzylinders 3 eine Rauhtiefe von 2 bis 4 µm, die in dem rein zylindrischen Abschnitt 46 zwischen dem verjüngten Befestigungsabschnitt 36 und dem Rand 45 durch Polieren geglättet ist, wobei ein Abtrag von 0,5 bis 1 µm erfolgt, der von der harten Außenschicht, deren Ausgangsdicke 4 bis 6 µm beträgt, abgetragen wird.

Der Außenzylinder 3 kann aus Baustahl geringer Güte, beispielsweise St 37, bestehen. Mittels der durch Nitrierhärten erzeugten dünnen harten äußeren Nitrier-Schicht 43 ist der gesamte Außenzylinder 3 vorgespannt, wobei die etwa 90 bis 95% der Wanddicke a ausmachende Kernschicht 44 unter Druckspannungen steht. Beim Auftreten von Biegewechselbeanspruchungen wird diese Kernschicht 44 entlastet und im Vergleich zur üblicherweise hartverchromten Außenseite 42 des Außenzylinders 3 nicht oder erheblich weniger unter Zugspannungen gesetzt; die Druckspannungen werden lediglich teilweise aufgehoben, d.h. neutralisiert. Die Gefahr von Biegewechselspannungsrissen und eines entsprechenden Bruches des Außenzylinders 3 ist damit wirksam begegnet. Durch das Nitrierhärten nur der Außenseite 42 des Außenzylinders 3 wird dessen Biegewechselfestigkeit um ca. 50% erhöht. Dies führt dazu, daß die Wanddicke um mehr als 20% verringert werden kann und anstelle von bisher Stahl hoher Güte, beispielsweise St 52 - wie bereits angegeben - ein handelsüblicher Baustahl geringerer Güte eingesetzt werden kann. Gleichzeitig wird die höchste Festigkeitsklasse 4 nach DIN 4551 erreicht. Die großen Vorteile der glatten inneren Oberfläche des gezogenen, zur Herstellung des Außenzylinders 3 verwendeten Rohres bleiben erhalten. Hierzu wird der Außenzylinder 3 beim Nitrierhärten an seinen beiden Enden in geeigneter Weise derart verschlossen, daß das Nitriermittel nicht in den Außenzylinder 3 hineingelangen kann.

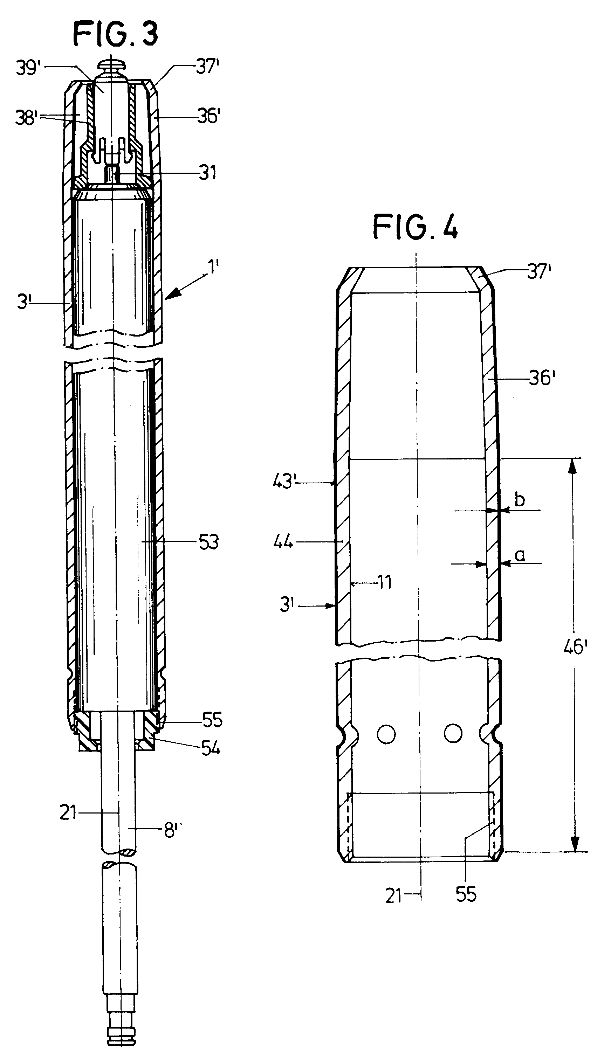

Die Gasfeder kann auch nach der Darstellung in Fig. 3 ausgestaltet sein. Hierbei ist eine Gasfeder der in Fig. 1 dargestellten Art mit einem zusätzlichen Außenzylinder 3' umgeben. Bei dieser Ausgestaltung ist der sich konisch verjüngende Befestigungsabschnitt 36' an diesem zusätzlichen Außenzylinder 3' ausgebildet. Die Gasfeder selber liegt mit ihrem äußeren Mantelrohr 53 gegen ein Distanzstück 38' an, das im Befestigungsabschnitt 36' angeordnet ist und gegen einen umgebördelten bzw. nach innen hereingezogenen Rand 37' des Außenzylinders 3' anliegt. Im Distanzstück 38' ist ein Schiebekörper 39' angeordnet, gegen den ein Bedienungshebel 52 zur Anlage kommen kann.

Das der Kolbenstange 8' benachbarte Ende der Gasfeder ist im Außenzylinder 3' mittels einer die Kolbenstange 8' übergreifenden Topf-Mutter 54 festgelegt, die in ein Gewinde 55 am zugeordneten Ende des Außenzylinders 3' eingeschraubt ist. Dieser Aufbau einer längenverstellbaren Gasfeder, deren Gehäuse 1' durch einen zusätzlichen Außenzylinder 3' verstärkt wird, ist marktüblich und beispielsweise aus der EP 0 133 524 B (entsprechend US-PS 4 979 718) bekannt. Im übrigen sind in Fig. 3 dieselben Bezugsziffern wie in Fig. 1 für entsprechend gleiche Teile verwendet worden, ohne daß es einer erneuten Beschreibung bedarf.

Der Außenzylinder 3' ist in gleicher Weise wie bei dem Ausführungsbeispiel nach den Fig. 1 und 2 mit einer dünnen harten äußeren Nitrier-Schicht 43' versehen. Für diese gelten die gleichen Dimensionsangaben wie im Ausführungsbeispiel nach den Fig. 1 und 2, weshalb dieselben Bezugszeichen verwendet werden. Insoweit darf auf die obige Beschreibung verwiesen werden. Auch hier gilt, daß der zylindrische Abschnitt 46' des Außenzylinders 3' poliert ist, während dies beim Befestigungsabschnitt 36' nicht notwendig ist.

## Patentansprüche

1. Längenverstellbare Gasfeder für höhenverstellbare Stühle, Tische od.dgl.,
- mit einem durch einen eine Außenseite (42) und eine Innenwand (11) aufweisenden Außenzylinder (3, 3') begrenzten Gehäuse (1, 1') mit einer Mittel-Längs-Achse (21),
- mit einem im Gehäuse (1, 1') in Richtung der Mittel-Längs-Achse (21) verschiebbar angeordneten Kolben (5),
- mit einer konzentrisch zur Mittel-Längs-Achse (21) angeordneten, am Kolben (5) befestigten, aus dem einen Ende des Außenzylinders (3, 3') herausgeführten Kolbenstange (8, 8'),
- mit einem Ventil (19) zur Betätigung einer Längenverstellung der Gasfeder und
- mit einem Befestigungsabschnitt (36, 36') an dem anderen Ende des Außenzylinders (3, 3'),
dadurch gekennzeichnet, daß
der Außenzylinder (3, 3') eine dünne harte äußere Nitrier-Schicht (43, 43') und eine erheblich weichere, die Innenwand (11) einschließende Kernschicht (44) aufweist.

2. Längenverstellbare Gasfeder nach Anspruch 1, dadurch gekennzeichnet, daß die gesamte Wanddicke (a) des Außenzylinders (3, 3') etwa um den Faktor 10 bis 20 größer ist als die Dicke (b) der äußeren Nitrier-Schicht (43, 43').

3. Längenverstellbare Gasfeder nach Anspruch 1, dadurch gekennzeichnet, daß die Dicke (b) der äußeren Nitrier-Schicht (43, 43') etwa 100 bis 200 µm beträgt.

4. Längenverstellbare Gasfeder nach Anspruch 1, dadurch gekennzeichnet, daß die äußere Nitrier-Schicht (43, 43') aus einer sehr dünnen sehr harten Außenschicht und einer sehr viel dickeren, sich zur Kernschicht (44) anschließenden und in diese übergehenden Diffusionsschicht besteht.

5. Längenverstellbare Gasfeder nach Anspruch 4, dadurch gekennzeichnet, daß die harte Außenschicht etwa 4 bis 6 µm dick ist.

6. Längenverstellbare Gasfeder nach Anspruch 1, dadurch gekennzeichnet, daß die äußere Nitrier-Schicht (43, 43') im Bereich eines sich an den Befestigungsabschnitt (36, 36') anschließenden zylindrischen Abschnitts (46, 46') poliert ist.

7. Längenverstellbare Gasfeder nach Anspruch 1, dadurch gekennzeichnet, daß die äußere Nitrier-Schicht (43, 43') im Bereich des Befestigungsabschnitts (36, 36') unpoliert ist.

## Claims

1. Longitudinally adjustable gas spring for adjustable-height chairs, tables or the like, comprising
- a housing (1, 1') with a central longitudinal axis (21), defined by an exterior cylinder (3, 3') having an outside (42) and an inside wall (11),
- a piston (5) disposed in the housing (1, 1') for displacement in the direction of the central longitudinal axis (21),
- a piston rod (8, 8') disposed concentrically of the central longitudinal axis (21) and secured to the piston (5) and guided out of one end of the exterior cylinder (3, 3'),
- a valve (19) for effecting a longitudinal adjustment of the gas spring, and
- a mounting section (36, 36') at the other end of the exterior cylinder (3, 3'),
characterized in that
the exterior cylinder (3, 3') has a thin hard external nitrided layer (43, 43') and a considerably softer core layer (44) enclosing the inside wall (11).

2. Longitudinally adjustable gas spring according to claim 1, characterized in that the entire wall thickness (a) of the exterior cylinder (3, 3') exceeds the thickness (b) of the external nitrided layer (43, 43') by the factor 10 to 20.

3. Longitudinally adjustable gas spring according to claim 1, characterized in that the thickness (b) of the external nitrided layer (43, 43') ranges from 100 to 200 µm.

4. Longitudinally adjustable gas spring according to claim 1, characterized in that the external nitrided layer (43, 43') comprises a very thin, very hard external layer and a much thicker diffusion layer adjoining in the direction towards the core layer (44) and passing into the latter.

5. Longitudinally adjustable gas spring according to claim 4, characterized in that the hard external layer has a thickness ranging from approximately 4 to 6 µm.

6. Longitudinally adjustable gas spring according to claim 1, characterized in that the external nitrided layer (43, 43') is polished in the vicinity of a cylindrical section (46, 46') adjoining the mounting section (36, 36').

7. Longitudinally adjustable gas spring according to claim 1, characterized in that the external nitrided layer (43, 43') is unpolished in the vicinity of the mounting section (36, 36').

## Revendications

1. Ressort pneumatique réglable en longueur pour chaises, tables ou analogues réglables en hauteur, comprenant un boîtier (1, 1') pourvu d'un axe longitudinal médian (21) et délimité par un cylindre extérieur (3, 3') muni d'un côté extérieur (42) et d'une paroi intérieure (11), un piston (5) disposé dans le boîtier (1, 1') avec une possibilité de translation dans le sens de l'axe longitudinal médian (21), une tige de piston (8, 8') qui est disposée de manière concentrique à l'axe longitudinal médian (21), est fixée au piston (5) et sort par l'une des extrémités du cylindre extérieur (3, 3'), une valve (19) pour commander le réglage en longueur du ressort pneumatique, et une portion de fixation (36, 36') située à l'autre extrémité du cylindre extérieur (3, 3'), caractérisé en ce que le cylindre extérieur (3, 3') comporte une couche nitrurée extérieure dure mince (43, 43') et une couche intérieure beaucoup plus tendre (44) qui inclut la paroi intérieure (11).

2. Ressort pneumatique réglable en longueur selon la revendication 1, caractérisé en ce que l'épaisseur totale de paroi (a) du cylindre extérieur (3, 3') est au moins 10 à 20 fois supérieure à l'épaisseur (b) de la couche nitrurée extérieure (43, 43').

3. Ressort pneumatique réglable en longueur selon la revendication 1, caractérisé en ce que l'épaisseur (b) de la couche nitrurée extérieure (43, 43') est égale à environ 100 à 200 µm.

4. Ressort pneumatique réglable en longueur selon la revendication 1, caractérisé en ce que la couche nitrurée extérieure (43, 43') se compose d'une couche extérieure très mince et très dure et d'une couche de jonction beaucoup plus épaisse qui est adjacente à la couche intérieure (44) et qui se diffuse dans celle-ci.

5. Ressort pneumatique réglable en longueur selon la revendication 4, caractérisé en ce que la couche extérieure dure possède une épaisseur d'environ 4 à 6 µm.

6. Ressort pneumatique réglable en longueur selon la revendication 1, caractérisé en ce que la couche nitrurée extérieure (43, 43') est polie dans la zone d'une portion cylindrique (46, 46') située dans le prolongement de la portion de fixation (36, 36').

7. Ressort pneumatique réglable en longueur selon la revendication 1, caractérisé en ce que la couche nitrurée extérieure (43, 43') n'est pas polie dans la zone de la portion de fixation (36, 36').
